# EUROPEAN PATENT APPLICATION

(11) **EP 3 722 990 A1**
(43) Date of publication of application: **14.10.2020**
(21) Application number: 19167799.6
(22) Date of filing: 08.04.2019
(51) Int. Cl.: G06K 9/00, G06K 9/62

(54) **CLEARANCE AND OBSTACLE DETECTION TECHNOLOGY FOR VEHICLES AND OTHER MOVABLE PHYSICAL ENTITIES**

(71) Applicant: DENSO CORPORATION, Aichi-pref 448-8661 (JP)
(72) Inventor: Trujillo, Noel, 88131 Lindau (DE); Chandrashekhariah, Pramod, 88131 Lindau (DE); Féret, Timo, 88131 Lindau (DE); Guzman-Sanchez, Pablo, 88131 Lindau (DE); Sajjaa, Matthias, 88131 Lindau (DE)
(74) Representative: Ernicke, Moritz

(57) **Abstract**

The present invention concerns a clearance and obstacle detection technology, which is preferably used for controlling vehicles or other movable physical entities. The technology uses computer-vision based detection and classification of structures in images that are gathered by a vision sensor and artificial intelligence (AI) technology. The invention comprises various aspects that can be used together or separately, in particular a computer implemented assessment method (AM) for creating a training data set (10), the training data set (10) in a computer readable form, a computer-implemented training method (TM) for training an AI-technology, filter rules (16) that are created or optimized by such training, and a classification method (CM) or device (4) for identifying or classifying structures in the environment (3) of a vision sensor (2) based on such filter rules (16). The invention further concerns a vehicle equipped with such classification technology.

## Description

The present disclosure concerns the field of computer-vision based detection and classification of structures in images gathered by a vision sensor, which is mounted to a movable physical entity, e.g. a vehicle. The disclosure concerns in particular the field of computer-vision based detection of a clearance or free space in front of a vehicle and the computer-vision based detection of obstacles in the visually monitored environment of a vehicle.

It is known in practice to use artificial intelligence (AI) based technology for computer-vision applications. Various out-of-the box AI methods and AI devices are available in the market for creating an emulator, which seeks to imitate human classification-behavior or decision-behavior. However, present approaches are limited by various influences, in particular the decision capacity of human labelers, who are confronted with sensor-based information, where they shall mark areas or structures with specific properties.

Furthermore, it has been observed that the single-perspective data gathered from a vision sensor limits the recognition quality of computer vision systems. Several approaches for computer-based vision seek to improve the classification quality by using e.g. multiple cameras or data fusion technology for combining information that was gathered by a vision sensor and e.g. a radar sensor or ultrasonic scanners. Those approaches have the drawback of high product cost and high computational cost.

Other approaches seek to classify objects in a single image of a single vision sensor with AI based classifiers. However, it is hard to clearly differentiate with such an approach between real volumetric objects in the environment and flat representations of objects, which for example occur on printed advertising panels or displays. As a result, wrong positive detections of obstacles may cause unnecessary or wrong responses. In general, the use of a single perspective image of a vision sensor provides only limited information, which could be used for analysis and labelling.

It is an objective of the present disclosure to provide an improved clearance and obstacle detection technology for vehicles and other movable physical entities, which overcomes the drawbacks of prior systems. The invention solves this objective with the features of the independent claims.

The clearance and obstacle detection technology according to the present disclosure comprises various methods and devices, which preferably work together or can be applied consecutive to each other. Those methods and devices are further on called aspects of the disclosure.

The various aspects concern:
- A computer implemented assessment method (AM) for creating a training data set;
- A computer readable training data set;
- A Computer implemented training method (TM) for AI technology;
- Computer readable filter rules for classification or identification of structures in image data units of a vision sensor;
- A computer-implemented classification method (CM) for identifying or classifying structures in the environment of a vision sensor based on (computer readable) filter rules;
- A classification software product for performing the computer-implemented classification when the software product is executed on a data processing device;
- A vehicle comprising a vision sensor and a classification device, which is connected to the vision sensor and designed to perform the computer-implemented classification method.

All those aspects use or make preparations for use of artificial intelligence (AI) technology. The aspects are however independent of the specific AI-method or AI-device or AI-software, which is used. The skilled person is aware that numerous AI-methods, AI-devices and AI-software products are available in the market or under development, so the specific details of such systems are not decisive for the application of the present teaching. However, some AI-methods or AI-devices may be suited better for the present purposes than others.

In general, an AI technology (i.e. method or device or software) may comprise a neural network. The neural network can be trained based on a training data set, which comprises sensor-based information, internal filters and labelling information. The sensor-based information is for example the image information gathered from a vision sensor. Labeling information can be provided by a human labeler and/or by a separate (automatic or semi-automatic) labeling system. A set of internal filters can be pre-defined, in particular for several neurons in the neural network. The trained neural network is able to make attributions between new sensor-based information and emulated labeling information, wherein this attribution continues the application of a decision behavior or classification behavior that was learned from the training data set.

The trained neural network thus works as a set of filter rules. However, it is sufficient to extract or store the structure and internal parameters of the trained neural network, in order to provide a computer readable set of filter rules which allow to repeat the attribution or decision behavior / classification behavior, when the filter rules are executed by another neural network or an equivalent technology on another data processing device.

Therefore, the filter rules that are created by training of AI technology allow to store the learned behavior in the form of attribution rules which can be stored, transferred and executed by a computerized system.

The use of a neural network is explained based on an example. When the training data set is provided to the neural network, a first set of internal filters in a front layer of neurons can be applied to the sensor-based information. The responses (i.e. identified features) of those neurons are linked to second layer neurons. When a filter result is positive, e.g. because some feature was detected, the respective front layer neuron will "fire", i.e. the neuron emit a signal. Those signals of front layer neurons are (directly or indirectly) connected through links with second layer neurons, which have an input threshold and/or contain further internal filters. The front layer neurons and second layer neurons are thus connected through a network of links, wherein each link may comprise a weight, i.e. an amplification value that is applied to the output-signal of the previous neuron.

Furthermore, every neuron may comprise an activation threshold. When the overall input to a neuron is lower than the activation threshold, the neuron will stay inactive. However, when the overall input is equal to or larger than the activation threshold, the respective neuron will fire and thus provide an output to the next link(s), which provide connections to a further layer and so on. The overall input to a neuron may comprise the sum of various signals, which are received through the links to previous layer neurons, wherein each signal on each link can be adapted by a weight.

The number and kind of neurons, their links in a neural network and the included weights and activation values are an example for computer-readable "filter rules", which can be stored and transferred. However, it is also possible to store the whole neural network (in particular the trained network) and to copy it or transfer it to another data processing device.

For the following explanation of training AI technology, it is assumed that the AI technology is based on a neural network as described above. The explanations can be transferred to other kinds of AI-technology, correspondingly.

During training of a neural network, sensor based information is iteratively provided to the front layer of the neural network. Additionally, the labeling information is provided to the neural network. The neural network will analyze the sensor based information, in particular by applying the internal filters, and it may find features. The presence, type and distribution of such features is analyzed by the neural network and an output is created which corresponds to (usually pre-defined) events or classes. This output is compared to labeling information, which is comprised in the training data set. When there is a deviation between the output and the labeling information, the weights and activation thresholds, or - more generally speaking - the filter rules are adapted, in particular in an iterative process and based on a cost reducing algorithm. The adaption of the filter rules is performed in the training process until the output of the neural network matches well with the labeling information as contained in the training data set.

Thus, the more the AI technology is trained, the more the filter rules will allow an attribution of features in the sensor based information to the labeling information. So, the trained filter rules will copy a decision behavior or a classification behavior, which is specified in the training data set.

After training, the filter rules that have been established with the AI technology, can be applied to new sensor-based information. The output of the executed (trained) filter rules is emulated labeling information. By applying the (trained) filter rules to new sensor-based information, thus emulated labeling information is attributed based on the decision rules that were learned from the training data set.

As the decision behavior is stored in a computer-readable form in the training data set in the form of a basis for establishing attribution rules, the training data set can be considered as a so called "ground truth". The attributions in the training data set are considered to be correct.

It is a known advantage of artificial intelligence technology, that the decision behavior is learned on an abstract level, just as a human brain or a biologic neural network learns to solve problems with abstract attribution rules, which are created based on a number of training iterations. As a result, artificial intelligence technology, or the filter rules created therewith constitute an computer-executable intuitive decision behavior, which is successfully applicable in a software method or by an automatic system not only to already known situations (training data set situations) but also to new situations and the related new sensor based information.

The invention and its various aspects are best understood by studying the drawings in connection with the following explanations.

The invention is depicted in the drawings in an exemplary and schematic way. They show:
- Figure 1 and 2:: An example of gathering image data units with a vision sensor and performing a perspective transformation to it;
- Figure 3:: An example for aligning reference views, which were created by the perspective transformation;
- Figure 4 and 5:: Examples for representing a set of aligned reference views and labeling information;
- Figure 6:: A block diagram for explaining an assessment method according to the present disclosure;
- Figure 7:: A block diagram for explaining a training method according to the present disclosure;
- Figure 8:: A block diagram for explaining a classification method according to the present disclosure;
- Figure 9:: An illustration of a vehicle equipped with a classification device according to the present disclosure;
- Figure 10:: An illustration of the effect of the perspective transformation when based on the reference-plane hypothesis.

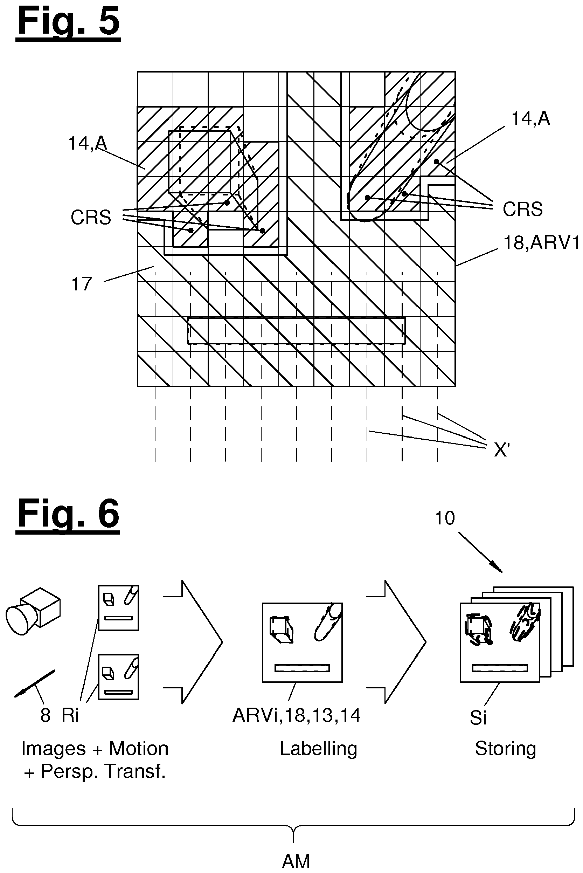

Figures 6 to 8 illustrate, how the various aspects of the present disclosure may work together. In a computer-implemented assessment method (AM), as depicted in Figure 6, sensor-based information in the form of image data units (Di, D1, D2) is gathered. The sensor-based information is however not used directly for assessment, but rather a perspective transformation is applied to the image information contained in the image data units (Di, D1, D2). Based on this perspective transformation two or more reference views (Ri, R1, R2) are created, which are aligned and stored in a set (Si). The labeling is performed for the set (Si) of aligned reference views (ARVi), in particular for a number of such sets (Si). The labeling information (13, 14) is then stored together with set(s) (Si) of aligned reference views (ARVi) in a training data set (10).

The training data set (10) comprising those set(s) (Si) and labelling information (13, 14) is a computer-readable piece of data, which can be stored on a physical data carrier (not shown) and/or transmitted through a data communication interface.

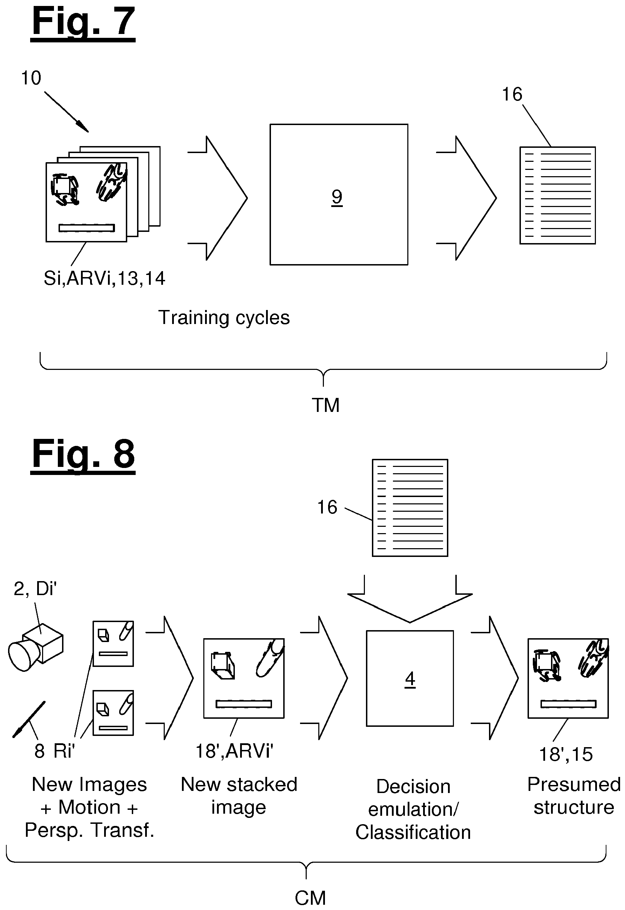

Figure 7 illustrates a computer-implemented training method according to the present disclosure. It take the training data set (10) as an input and uses it for training of AI-technology, which may comprise an AI-device, an AI-method and/or an AI-software or AI-software module. Through this training, filter rules (16) are created and/or optimized. As explained above, those filter rules comprise a computer-readable description of a decision behavior or classification behavior, which copies or emulates the result of the labeling, as it is specified by the training data set. The filter rules (16) thus attribute specific features of the aligned reference views (ARVi) to the labeling-information (13, 14).

The filter rules are also a computer-readable piece of data, which can be stored on a physical data carrier (not depicted) and/or transmitted through a data communication interface.

As depicted in Figure 8, the filter rules (16) can be used for creating or configuring a classification technology. The classification technology can be a computer-implemented classification method (CM), a classification device (4), which is designed to perform the computer-implemented classification method (CM), or a classification software-product, which contains instructions for performing the classification method (CM), when executed on a data processing device (not depicted).

The output of the classification technology is emulated labeling information (15), which allows to identify or classify structures in newly gathered image information. This output can be used for identifying or classifying new structures in the environment of a vision sensor and/or for controlling technical objects and devices.

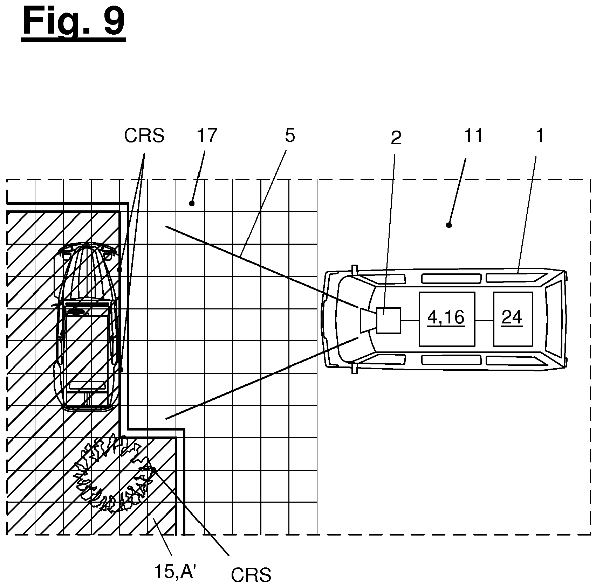

Figure 9 shows an example of a vehicle (1), which comprises a classification device (4) according to the present disclosure and respective filter rules (16). The vehicle further comprises a vehicle control section (24) which uses the output of the classification device (4) for controlling the movement of the vehicle (1). Likewise, the present classification technology can be used for identifying or classifying structures in the environment of any other physical entity, to which a vision sensor is mounted, and thus for controlling the movement of the physical entity (1). The physical entity (1) may for example be a robot or an effector (tool) moved by a robot. Figure 9 shows a vehicle of the motor vehicle type. However, any other kind of vehicle can be present, e.g. a towed vehicle, a land vehicle, a swimming vehicle, a flying vehicle and so on. The vehicle (1) may be used for any arbitrary purpose, in particular for any kind of transportation or exploration.

The present classification and identification technology is preferably used for computer-vision based clearance and obstacle detection. The term "clearance" means the free travel space or movement space within the (monitored) environment of the vision sensor (2), in particular the space between the vision sensor (2) and a closest relevant structure (CRS, 22, 23), which is raised with respect to a reference plane (11) and/or which is considered to be an obstacle. An obstacle can be any structure (22, 23) in the environment of the vision sensor, which should not be contacted by the vision sensor or the physical entity to which the vision sensor is mounted.

A first aspect of the present disclosure concerns a computer implemented assessment method (AM) for creating a training data set (10). This assessment method (AM) can be performed by a computer system or data processing device, which is adapted to execute (software) instructions representing the various method steps. The computer-implemented assessment method may thus be performed by installing or executing an assessment software product, which comprises those instructions. The same applies to all other computer-implemented methods, which are disclosed here.

The training data set (10) is designed to serve as the ground truth for an AI technology (AI-method or AI-device or AI software module) as described above. The AI technology is trained with the information contained in the training data set (10) in order to create filter rules (16).

The assessment method (AM) comprises at least the following steps. At least two image data units (Di, D1, D2) are gathered from a vision sensor (2) which is mounted to a physical entity. The physical entity may for example be a vehicle, in particular a motor vehicle, a robot or any other technical object. The physical entity (1) and/or the vision (2) can be movable with respect to the environment (3). Alternatively, at least a part of the environment (3) can be movable at a known or determined degree with respect to the vision sensor (2).

Preferably, the vision sensor (2) is mounted on the physical entity in a fixed or adjustable position. The movement of the physical entity (1) may thus correspond to the movement of the vision sensor (2) and vice versa.

An image data unit (Di, D1, D2) may have any kind of computer-readable data format. It may for example be a bitmap-image or any other suitable kind of image file. An image data unit (Di, D1, D2) may contain greyscale information, which is preferred, or color information. Alternatively or additionally, it may contain heat-map information or any other kind of data, which can be determined in a perspective view by a vision sensor (2).

The at least two image data units (Di, D1, D2) are taken in consecutive instants of time (t1, t2). They concern the environment (3) of the vision sensor (2) / physical entity (1) and they contain image information from overlapping spaces (7) in this environment. This means that at least a part of the environment (3), which is covered by the perspective view (5) of the image sensor during (t=t1) gathering of a first image data unit (D1), must also be covered by the perspective view (5') of the image sensor (2) during (t=t2) gathering of a second or further image data unit (D2, Di).

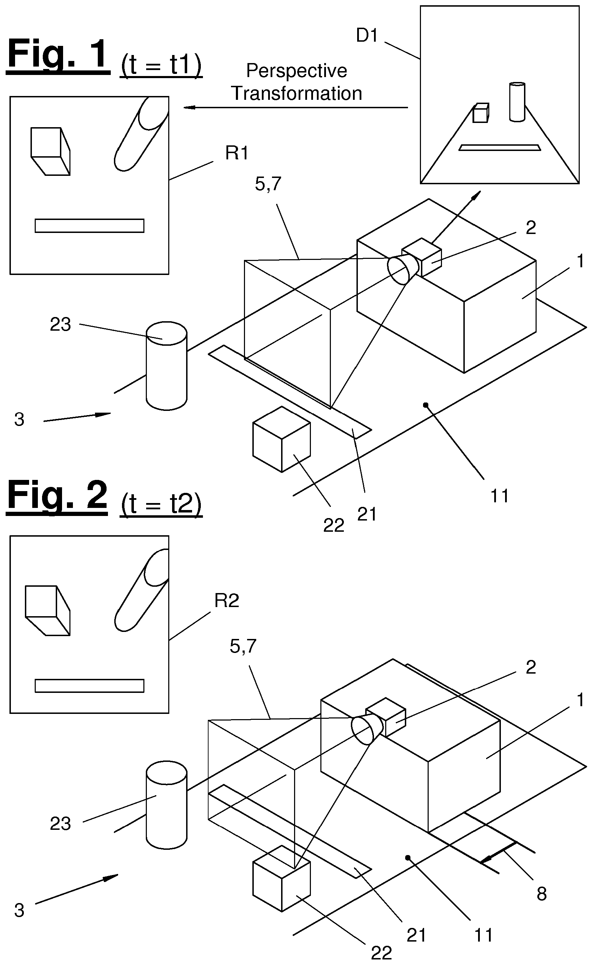

Depending on the design and type of vision sensor (2), the image information contained in an image data unit (D1, D2, Di) will comprise a perspective view (5, 5') of the environment as it was visible to the vision sensor in the moment (t1, t2) of capturing the image. Figure 1 shows in the upper right corner the image information which is gathered in the scenery of Figure 1 by the image sensor (2) in the perspective view (5).

Between at least two of the gathered images, a relative motion between the vision sensor (2) and the monitored environment occurs. In the following description, it will be assumed that this relative motion is an ego-motion (8) of the vision sensor (or correspondingly the physical entity). Due to the relative motion / ego-motion (8), the perspective views (5, 5') in the at least two gathered images (D1, D2, Di) will differ.

At least one reference plane (11) is defined in the (monitored) environment (3) of the vison sensor (2) / physical entity (1). The location of this reference plane (1) with respect to the vision sensor (2) should be known. According to a first alternative, the reference plane (11) can be a plane, which is defined as a fixed plane with respect to the environment (3). According to a second alternative, the reference plane (11) can be defined as a movable plane, the location of which is however known or determined with respect to the vision sensor (2).

The knowledge about the location of the reference plane (11) with respect to the vision sensor (2) may in particular comprise both a known relative position and a known relative orientation between the vision sensor (2) and the reference plane (11). Preferably, the reference plane is defined and its location is known in a 3-dimensional coordinate system.

In the examples depicted in Figures 1 and 2, the reference plane (11) is a floor, on which two raised objects (22, 23) are arranged. Furthermore, a flat object (21) is arranged on the reference plane (11), which may for example be a floor marking or a very thin object like a sheet material. The objects (21, 22, 23) are however not known to the vision sensor as "objects". They are rather visible in the perspective view (5, 5') as "structures".

In the examples of Figures 1 and 2, the vision sensor (2) and the physical entity (1) are moved on the reference plane (11) / floor. Thus, the movement (8) is here an ego-motion of the vision sensor, by which the vision sensor (2) comes closer towards the objects / structures (21, 22, 23). However, the same relative motion (8) could occur, when the reference plane (11) is moved relative to a stationary vision sensor (2) or a stationary physical entity (1). The reference plane (11) could for example be imagined as the top surface of a movable table, on which the objects (21, 22, 23) are arranged. In this case, the movement of the reference plane (11) / table may be known by any arbitrary source. For example, the movement of the table / reference plane (11) could be visually detected based on the image data gathered from the vision sensor (2). Alternatively or additionally, the relative movement could be controlled by an external device, e.g. a table moving drive, and the relative movement could be gathered as input data from this extern device. For the present disclosure, it is only relevant, that location of the reference plane (11) and the relative motion (8) between the reference plane (11) and the vision sensor (2), which occurs during the time instants (t1, t2) of gathering the image data units (Di, D1, D2), are known.

A perspective transformation is performed to the image information contained in the image data units (Di, D1, D2) to transform this (perspective view) information into reference views (R1, R2, Ri). This transformation is depicted in Figure 1 for the image data unit (D1), the image information of which is transformed into the reference view (R1).

Preferably, for each image data unit (D1, D2, Di), this perspective transformation is performed separately, in particular based on the known momentary location of the reference plane (11) with respect to the vision sensor (2) at the time instant (t1, T2) of gathering the respective image data unit (D1, D2, Di).

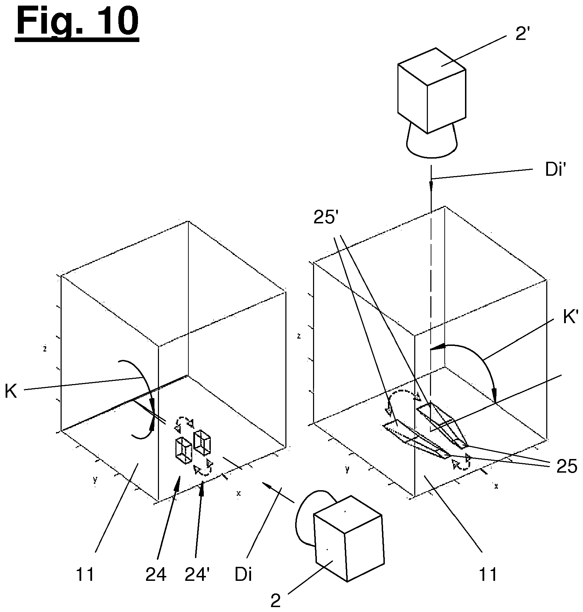

Further details about the perspective transformation will be explained by taking reference to Figures 1, 2 and 10. Figure 10 illustrates a comparison of a real world scenario, which is detected by a vision sensor (2) in a perspective view (Di) - depicted in the left part - and the perceived scenario or presence of structures, which is assumed in the reference view (Di') of a virtual vision sensor (2').

The virtual vision sensor (2') has another position and orientation with respect to the scenery than the real vision sensor (2). In the scenery, two wire frame models of a cube (24, 24') are arranged on a reference plane (11), which forms the floor of the scenery. It may further be assumed that the two wire frame models (24, 24') represent the same cube, which is however moved between an initial position (24) and a moved position (24').

The real vision sensor (2) does not know from the perspective image information, if the line shaped structures, which are visible in the perspective view (Di) concern any 3-dimensional object, i.e. a cube, or flat structures, e.g. a perspective image of a cube painted on the floor / reference plane (11). As will be explained further below, it will be assumed for the perspective transformation, which is applied in the presently disclosed technology, that every visible structure in the perspective view (Di) is a structure, which is lying in the reference plane (1). This assumption is further-on called reference-plane hypothesis. If this assumption is correct or not, can be learned from an alignment of the reference views (Ri, R1, R2) .

To simplify understanding of this hypothesis test, further explanations on the optical effects are given by taking reference to Figure 10 again.

The upper and lower surfaces of the cubes (24, 24') in the left scenery of Figure 10 have differing positions, in particular differing height positions with respect to the optical center line / bore sight direction of the vision sensor (2). As a result, a movement of the cube from the initial position (24) to the moved position (24') will cause different variations to the structures 25, 25') (lines), which are visible as representations of the upper surface and the lower surface in the perspective view. Those variations are illustrated in the right scenery of Figure 10. Based on the movement of the cube, the structures (25') representing the upper surface of the cube will be subject to a larger perspective translation (i.e. visible side-offset) than the structures (25), which represent the lower surface of the cube. This phenomenon is exploited in the assessment and classification technology according to the present disclosure, which will be explained in more detail below. The reference view (Ri, R1, R2) has a specified incidence angle (K') with respect to the reference plane. The incidence angle (K') may for example be chosen such, that the boresight direction of the reference view is orthogonal to the reference plane. However, any other incidence angle is possible. The reference view should be different from the perspective view, in which the initial image was gathered.

The perspective transformation is based on the assumption or hypothesis, that every feature in the image data units (D1, D2, Di), as gathered by the image sensor (2), is a non-elevated structure lying in the reference plane.

For the perspective transformation, all visible features are thus treated as if they were flat printed elements on a hypothetical screen lying in the reference plane (11). The image data unit (D1, D2, Di) gathered by the vision sensor (2) actually comprises only a perspective view (5, 5'), i.e. 2D-coordinates for all image sections according to perspective sight, but no real 3D-data. However, based on the reference-plane hypothesis and the known location of the reference plane (11) with respect to the vision sensor (1), every image section can be attributed to an assumed 3D-position in the environment (3) of the vision sensor, which is on one hand - as defined by the hypothesis - lying in the reference plane and on the other hand computable based on the perspective position in the image data unit (Di, D1, D2)
The result of a perspective transformation as explained above, is shown in the right hand drawing of Figure 10. On the reference plane (11) / floor, the structures (25, 25') are depicted, which are assumed to be present based on the reference-plane hypothesis. The reference view (Ri, R1, R2) is a computed view on those structures (25, 25'), which would be visible to a virtual vision sensor (2'), which is arranged at a known incidence angle (K') with respect to the reference plane (11). In the example of Figure 10, this incidence angle (K') is orthogonal to the reference plane (11). Alternatively, any other incidence angle (K') can be assumed. The orthogonal incidence angle (K') however simplifies the alignment process, which is described further below.

As the perspective transformation is applied to the at least two image data units (D1, D2, Di) and the reference plane (11) with a known location, the created reference views (Ri, R1, R2) have a common spatial relation to the reference plane (11) and thus to a common known coordinate origin.

The reference views (R1, R2, Ri) are aligned. The alignment is performed by compensating for the relative motion between the vision sensor (2) and the reference plane (11), in particular by compensating for the ego-motion of the vision sensor in relation to the reference plane (11). The relative motion / ego-motion (8) is the movement, that occurred between the instants of time (t1, t2) at which the image data units (D1, D2, Di) were gathered.

As explained above, based on
- the reference-plane hypothesis,
- the known spatial relation between the vision sensor (2) and the reference plane (1), and
- the perspective position,
for any image feature or visual element of the image data unit (D1, D2, Di), its assumed position on the reference plane (11) after the perspective transformation is known. Furthermore the relative motion (8) is known in relation to the reference plane (11).

Alignment can be performed in such a way, that spatially corresponding sections of the perspective views (5, 5') are mapped to each other. In other words, alignment can be performed in such a way, that corresponding parts of the reference plane (11), which are covered by the overlapping spaces (7), which are covered by the image information contained in the image data units (D1, D2, Di), are moved in an overlapping position.

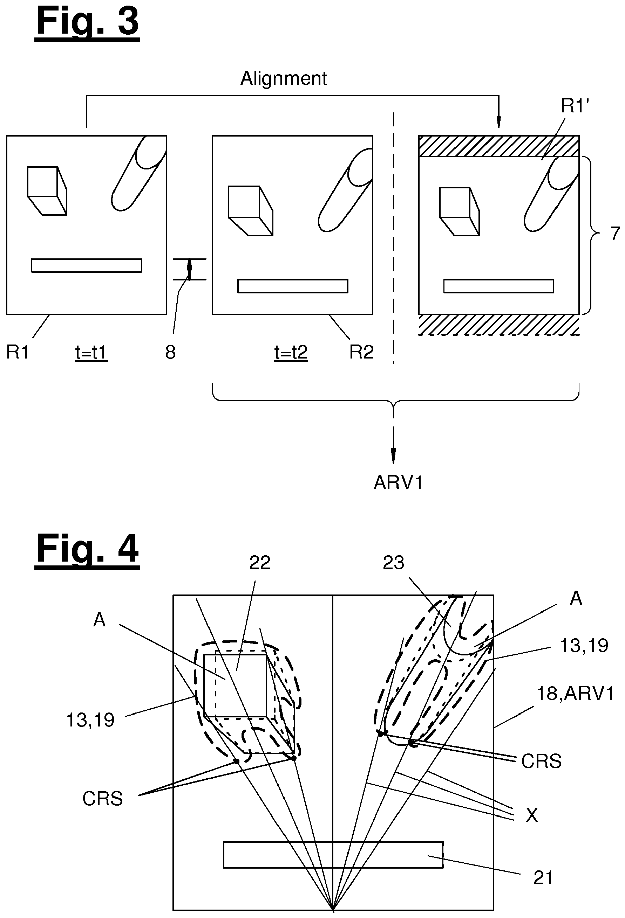

As illustrated in Figure 3, such alignment can for example be done by shifting at least one of the perspective views (R1) in such a way, that the relative motion / ego-motion (8) is compensated. In Figure 3, the image information contained in the first perspective view (R1) was shifted as far, as the perspective view on the reference plane (R2) has moved due to the relative motion (8) between the time instants (t1, t2) of gathering the image data units (D1, D2, Di). The result is, that the structures representing the lower surfaces of the objects (21, 22, 23) come into overlapping positions in both the shifted (first) reference view (R1') and the second reference view (R2).

Here, the reference-plane hypothesis comes into play. For every visible structure, for which the reference-plane hypothesis is correct, i.e. for every visible structure, which really lies in the reference plane, the graphical representation in the aligned reference views (R1', R2) will match. However, for any structure, for which the reference-plane hypothesis is not correct, i.e. is not part of the reference plane (11) or which moved with respect to the reference plane (11), the representative structures in the aligned reference views (R1', R2) will not match. In particular, any structure belonging to an object or object part, which is in reality raised with respect to the reference plane (11), will have non-matching positions in the aligned reference views (R1', R2). As a result, the matching or non-matching of visible structures or features in aligned reference views (R1', R2) can be used for confirmation whether the reference-plane hypothesis was correct. Or in other words, whenever non-matching structures or features are identified in the corresponding areas of the aligned reference views (R1', R2), it can be concluded that those structures belong to a moving object and/or to an object or object part which in reality has a raised position / is elevated with respect to the reference plane (11).

It will now be explained, how this can be exploited for generating a training data set (10) and performing classification / identification steps in an AI-based technology. It is now assumed that above steps of gathering image data units, performing perspective transformations and aligning reference views are performed multiple times, in particular in many iterations. Preferably, the steps are performed for multiple sets of image data units / aligned perspective views and in particular for a larger variety of environment situations, which are considered relevant for the further use of the physical entity / classification technology. In case of a vehicle, for example various situations of urban traffic, roadside traffic, motorway traffic, parking and so on, should be covered, wherein for each situation at least two image data units of consecutive instants should be gathered.

The interval between the time instants (t1, t2) of gathering the two or more consecutive images can be chosen arbitrarily. In particular, a momentary movement speed of the physical entity or vision sensor may influence the decision and likewise the optical properties of the vision sensor might be relevant. In general, it is beneficial when the at least two reference views (after perspective transformation) overlap by at least 50%, preferably by at least 70% or 80%.

In the assessment method (AM) according to the present disclosure, a set (Si) of aligned reference views (ARVi) is created and image labeling-information (13, 14) is gathered, by which an area is marked (in at least one of the aligned reference views), which contains image information (in particular a feature), which is associated with a structure that is elevated with respect to the reference plane (11) and/or that is considered as an obstacle.

The labeling can be done by a human labeler and/or by an automatic or semi-automatic process. Preferably, the aligned reference views are displayed on a screen and a human labeler provides inputs for identifying the respective areas of at least one of the aligned reference views (ARVi). The inputs are directly or indirectly stored as the image labeling information (13, 14).

Figures 4 and 5 show two examples of aligned reference views (ARV1), to which image labeling information (13, 14) is added. In both examples, the image information of the corresponding reference views (Ri, R1', R2) is included in a separate channel of a stacked image (18), which represents the set (S) of aligned reference views (ARVi). Thus, the various image information parts can be observed in parallel by a human labeler, which is more convenient. In particular, the image information of each of the corresponding reference views (Ri, R1', R2) can be included in a separate color channel of a stacked image (18). This will result in the effect, that matching structures in the aligned reference views (ARVi) will be visible as grey scale information in the stacked image (18). Non-matching structures in the aligned reference views (ARVi) will however be visible in the stacked image as colored sections. For the human labeler, a colored section thus indicates that the respective real world object must either be elevated with respect to the reference plane (11) and/or must have moved between the time instants (t1, t2) of gathering the image data units (D1, D2, Di) with respect to the reference plane (11).

In other words, the computer-implemented assessment method may have the technical advantage that any structure (21, 22, 23, 25') or feature, for which the assumption of lying in the reference plane (11) is incorrect, is visible in the stacked image (18) in color, whereas any structure (21, 22, 23, 25') for which the assumption of lying on the reference plane is correct, is visible in the stacked image in grey-scale.

Despite the above mentioned advantages, the aligned reference views (ARVi) may also be stored in any other data-type or format, in particular without using a stacked image or aggregation of image information in separate (color) channels.

Image labeling information (13, 14) can be input and/or stored in any arbitrary way. According to the example of Figure 4, the image labeling information may denote an area, in which a marked structure is contained. The area can be limited by a line, which is drawn closely around the structures, which are considered to be elevated with respect to the reference plane (11) and/or considered an obstacle.

In the example of Figure 5, the aligned reference views (ARVi) are segmented, e.g. in a number of cells with a pre-defined size. Labeling information (14) is stored here as a selection of those cells, which contain at least one structure, which is considered to be elevated with respect to the reference plane (11) and/or considered an obstacle.

The assessment method according to the present invention outputs a training data set (10), which contains at least one, and preferably multiple sets (Si) of aligned reference views (ARVi) and the related image labeling information (13, 14). The stored training data set (10) form a separate aspect of the present disclosure. It is preferably computer readable and stored on a physical data carrier and/or can be transmitted through a data communication interface. The same applies to any other result of the methods, which are disclosed here.

Once the training data set (10) is created, it can be used as an input for an AI technology. The specific AI technology (AI device or AI method or AI software) to be used can be selected by the skilled person.

Another aspect of the present disclosure concerns a computer-implemented training method (TM) for an AI technology, i.e. for an AI-method or an AI-device or an AI-software.

The training method (TM) according to the present disclosure may be performed by a computer system or data processing device, which is adapted to execute instructions representing the various method steps. The computer-implemented training method (TM) may thus be performed by installing or executing a training software product, which comprises those instructions, on a computer or other data processing device (not depicted). The training software product may comprise the instructions for performing the training method, and optionally further the training data set and/or the AI technology. Alternatively, the training data set (10) and/or the AI technology can be independent from the training software product.

The computer-implemented training method (TM) according to the present disclosure is illustrated in Figure 7. It comprises following steps.

A training data set (10) is fed as a ground truth to a computerized AI-device, a computer-implemented AI method or an AI software module (9). The AI-device, AI-method or AI-software module (9) is configured to analyze the image information contained in the at least one set (Si) of at least two aligned reference views (ARVi), which are contained in the training data set (10). It establishes and/or optimizes filter rules (16), which describe / contain /establish an attribution of detected features in any of the aligned reference views (ARVi) and/or deviations among the aligned reference views (ARVi) to the image labeling-information (13, 14, A), which is contained in the training data set (10).

In a preferred embodiment, the filter rules (16) may comprise a neural network with several layers, in particular a convolutional neural network. The filter rules (16) resulting from the training method may comprise the (trained) neural network as a whole, or a description of its structure and internal parameters, e.g. the number and distribution of neurons, the included amplification values / weights of the links, the activation thresholds and optionally the internal filters included in the neurons. If another type of AI-technology is used instead of a neural network, the contents of the filter rules (16) can be different.

During the training, the internal parameters and potentially the structure of the AI-technology (9) can be changed and in particular optimized in such a way, that the filter rules (16) provide an attribution that emulates a decision behavior as it is defined by the ground truth (correlation of image labelling information (13, 14, A) with features in sensor-based information).

The filter rules (16), i.e. the result of training the AI technology (9), can be stored in a computer-readable form on a physical data carrier and/or be transmitted through a data communication interface. The filter rules (16) is a separate aspect of the present disclosure.

The filter rules (16) according to the present disclosure are designed and intended for classification or identification of structures (21, 22, 23, 24, 25) in image data units (D1, D2, Di) of a vision sensor (2), which are transformed into aligned reference views (Ri). The filter rules (16) are created by a computer-implemented training method (TM) according to above explanations and/or contain rules for analyzing image information in a set (Si) of aligned reference views (ARVi). Features in any of the aligned reference views (R1, R2, ARVi) are detected and/or deviations between two or more aligned reference views (R1, R2, ARVi) of a set (Si) are detected according to the contained rules. Furthermore, labelling information (13, 14, 15) is attributed based on the contained rules to those features and/or deviations. The labelling information denotes an area (A) containing a structure, which is presumed to be elevated with respect to the reference plane (11) and/or which is considered to be an obstacle.

Another aspect of the present disclosure concerns a computer-implemented classification method (CM) for identifying or classifying structures in the environment (3) of a vision sensor (2) based on filter rules (16), in particular the filter rules (16) with the above mentioned design and/or filter rules (16) which are created according to the training method (TM) mentioned above.

The vision sensor (2) to be used in the computer-implemented classification method can be movable and/or can be mounted to a movable physical entity (1).

The classification method (CM) performs various steps which are very similar to the steps in the assessment method (AM). Above explanations on the steps of the assessment method (AM) may be applied correspondingly to the steps explained below for the classification method (CM) .

The classification method (CM) is illustrated in Figure 8. It comprises following steps. At least two new image data units (Di') are gathered from the vision sensor (2). The terminology "new" means that the image data units to be used in the classification method (CM) preferably are not included in the training data set (10). Preferably, the new image data units (Di') are gathered in an application domain situation, i.e. in a real-driving condition or in a real-manufacturing condition or the like.

The new image data units (Di') are taken in consecutive instants of time. They concern the environment of the vision sensor / physical entity and they contain image information from overlapping spaces in this environment.

At least one reference plane (11) is defined in the environment (3), which has a known location with respect to the vision sensor (2). Here, the same explanations apply, which are given above for the assessment method (AM), however, the reference plane(s) (11) used in the classification method (CM) may be the same as in the assessment method (AM) or different ones.

The definition of the reference plane (11) in the classification method (CM) may be done arbitrarily. Preferably, a reference plane (11) can be selected, which corresponds to the reference plane(s), which was/were used in the assessment method, or respectively, which were the basis for establishment of the filter rules (16). However, it should be noted, that based on the abstract intuitive decision rules that are created with AI-technology, the classification method (CM) will even work correctly, if another reference plane (11) is selected, which does not coincide with any of the reference planes used in the assessment method.

A perspective image transformation is performed on the image information contained in the new image data units. Again, the reference-plane hypothesis is applied.

For the perspective transformation performed in the classification method (CM), the same explanations apply, which were given above for the assessment method (AM). However, the incidence angle (K') of the reference view (Ri') in the classification method (CM) can be the same as the incidence angle (K') used in the assessment method, or another incidence angle (K').

Preferably, the incidence angle (K') of the reference view (Ri') in the classification method (CM) is orthogonal to the reference plane (11), which is selected in the classification method (CM).

The reference views (Ri') which are created by the perspective transformation in the classification method (CM) are aligned by compensating for a relative motion (8') between the vision sensor (2) and the reference plane (11), which relative motion (8') occurred between the instants of time at which the new image data units (Di') were gathered. A new set (Si') of aligned reference views (ARVi') is created, which may again have any suitable format. It may in particular be a stacked image as explained above. Alternatively, the image information of the new aligned reference views (ARVi') may not be aggregated but rather kept separate.

The filter rules (16) are applied to the new set (Si') of aligned reference views (ARVi'), so that an image section (A') is marked with emulated labeling information (15), which presumably contains a structure, which is elevated with respect to the reference plane (11), and/or which is presumably an obstacle.

According to a preferred variant, the new set (Si') and the emulated labeling information (15) are stored to a physical data carrier and/or given as an output.

For the purpose of identifying a free space, it is suggested that at least one closest relevant structure (CRS) is identified in the new set (Si') of aligned reference views (ARVi'). The identification of a closest relevant structure (CRS) may be performed in any arbitrary way.

According to a preferred embodiment one or more search directions are defined in the aligned reference view(s) (ARVi). Such search directions are further-on called "pre-defined direction". Figures 4 and 5 exemplarily show such "search directions" or "pre-defined directions". Although Figures 4 and 5 concern aligned reference views (ARVi) which are used in the assessment method (AM) and/or training method (TM), corresponding pre-defined directions can be used in the classification method (CM).

According to the example of Figure 4, a pre-defined direction (X) can be a line of sight direction. According to the example of Figure 5, a pre-defined direction (X') can be a front axis direction of the physical entity (1) or the vision sensor (2). Alternatively, any other direction can be used as a pre-defined direction, along which a closest relevant structure can be searched.

A structure, which is on one hand a presumed obstacle and/or presumed to be elevated with respect to the reference plane, and on the other hand - among a potential plurality of consecutive structures along the pre-defined direction - lying closest to the vision sensor (2) in coordinates of the reference plane (11), is considered to be the closest relevant structure (CRS).

A section between the vision sensor (2) and a closest relevant structure (CRS) can be identified as the free space or clearance for further movement of the physical entity. Alternatively or additionally, any section lying in the pre-defined direction at or beyond the closest relevant structure (CRS) can be identified as a blocked space.

In case of motion control for the physical entity, a command can be issued that movement of the physical entity is only allowed for the identified free space or clearance and/or that (further) movement towards the identified blocked space is prohibited or limited.

The computer implemented classification method (CM), as explained above, may be performed by a classification device (4), which is preferably connected to a vision sensor (2). The vision sensor (2) may also be a part of the classification device (4). Above explanations on the computer-implemented classification method (CM) correspondingly apply to the computerized classification device (4) according to the present disclosure.

The computer implemented classification method (CM), as explained above, may also be devised as a classification software product, which is designed for being executed on a data processing device. The classification software product may comprise the filter rules (16) as explained above and instructions for performing a classification method according to above explanations when the instructions are executed on the data processing device or computer.

Figure 9 shows an example of using the classification method or classification device for controlling a vehicle (1). The vehicle (1) may in particular be a motorized vehicle or an autonomously driving vehicle. The vehicle (1) comprises at least one vision sensor (2) mounted on the vehicle (1), and a classification device (4) according above explanations, which is connected to the at least one vision sensor (2), and a vehicle control device (24).

The vehicle control device (24) is designed to control a movement of the vehicle (1) based on image information which is gathered from the vision sensor (2) and processed by the classification device (4). A control action of the vehicle control device (24) is based on emulated labeling information (15) outputted by the classification device (4), in particular based on an identified structure, which is presumably elevated with respect to the reference plane (11), and/or which is a presumed obstacle.

For vehicle movement control, it is especially preferred that the reference plane (11), which is used in the assessment method (AM) and/or in the classification method (CM) is the contact plane of the vehicle wheels to the roadway.

Variations to the invention are possible in various ways.

For the purpose of training, it is beneficial that the AI-technology can be trained in consecutive cycles, possibly with different training data sets or with a training data set, which is extended by including additional aligned reference views for newly gathered image data units.

Likewise, in the computer implemented training method according to the present disclosure, it is preferred that the AI-method, AI-device or AI software module (9) is configured to receive at least two new aligned reference views (R1', R2', ARVi') and to provide emulated labeling information (15) as an output. The emulated labeling information (15) can be created based on the current training level of the filter rules (16), which may however not be the final level or a sufficient level.

An area (A') can be identified by the emulated labeling information, which contains image information associated with a structure or feature, which is based on the filter rules (16) presumed to be in reality elevated with respect to the reference plane (11), and/or an obstacle.

This emulated labeling information may then be compared to newly gathered image label information (13, 14) from a human labeler or an automatic or semi-automatic labeling system, wherein this newly gathered image label information (13, 14) has ground truth level (i.e. is considered to be correct).

If the emulated labeling information (15) coincides with the newly gathered image label information (13, 14), it can be confirmed that the AI-based classification worked correctly for the newly gathered aligned reference views. If however, there is a difference between the emulated labeling information (15) and the newly gathered image label information (13, 14), further training might be required to optimize the filter rules (16).

The newly gathered reference views and the newly gathered image label information may also be taken from a section of the training data set (10), which has not been used for training of the AI technology before. In other words, the training data set (10) or the contained sets (Si) and image labeling information (13, 14) can be used in consecutive training cycles. In first cycle, the sets (Si) can be used directly for training. In a consecutive cycle, one or several sets, which contain newly gathered reference views and newly gathered image label information according to above definition, can be used initially for double-checking or evaluating the training level of the filter rules (16). Possibly, only those sets are used for further training in the consecutive step, for which the output of the filter rules (16) differed at an inadmissible degree from the ground truth. This will help to include only such sets in the further training process, from which a knowledge gain for the filter rules (16) / the AI technology can be expected.

### LIST OF REFERENCES

- 1: Physical entity / vehicle / robot
- 2: Vision sensor / Camera (real position)
- 2': Virtual vision sensor / Camera (reference position with respect to reference plane)
- 3: Environment
- 4: Computerized classification device
- 5, 5': Perspective view
- 6: Reference view / Top view
- 7: Overlapping spaces
- 8: Ego-motion
- 9: AI software module / AI-algorithm / Convolutional Neural Network - CNN
- 10: Training data set
- 11: Reference plane
- 12: Ground truth
- 13: Labeling information
- 14: Labeling information
- 15: Emulated labeling information
- 16: Filter rules / Emulator / Trained neural network
- 17: Free space in reference plane
- 18: Stacked image
- 18': New stacked image
- 19: Obstacle / Structure elevated with respect to reference plane
- 21: First structure - flat rectangle
- 22: Second structure - raised cube
- 23: Third structure - raised cylinder
- 24: Cube (wire frame model) - initial position
- 24': Cube (wire frame model) - moved position
- 25: (Stationary) structure in reference plane-co-planar assumption correct
- 25': (Non-stationary) raised structure - co-planar assumption incorrect
- 26: Vehicle control device
- A: Area
- AM: Assessment Method
- ARVi: Aligned reference view for Set i / for stacked image
- ARVi': New aligned reference views
- K: Incidence angle of perspective view axis on reference plane
- K': Incidence angle of reference view axis on reference plane
- CRS: Closest relevant structure
- Di: Image data unit of time instant i
- Ri: Reference view of time instant I (for training data set)
- Ri': New reference view (for evaluation / in-field application)
- t: Time
- ti: Instant of time
- S: Set of aligned reference views
- X: Pre-defined direction / line of sight
- X': Pre-defined direction / front axis direction

## Claims

1. Computer implemented assessment method (AM) for creating a training data set (10), which training data set (10) is in particular designed to serve as a ground truth (12) for an AI-method or an AI software module (9), and wherein the assessment method (AM) comprises following steps:
- Gathering at least two image data units (Di, D1, D2) from a vision sensor (2) which is mounted to a movable physical entity (1), wherein the image data units (D1, D2)
∘ are taken in consecutive instants of time (t1, t2), and
∘ concern the environment (3) of the physical entity (1), and
∘ contain image information from overlapping spaces (7) in this environment (3);
- Defining at least one reference plane (11) in the environment (3), which reference plane (11) has a known location with respect to the vision sensor (2);
- Performing a perspective transformation on the image information contained in the image data units (Di, D1, D2) to transform it into reference views (Ri, R1, R2) with a specified incidence angle (K') to the reference plane (11), wherein the transformation is based on the assumption that every feature in the image data units (D1, D2) belongs to a non-elevated structure lying in the reference plane (11);
- Aligning the reference views (R1, R2, Ri) by compensating for an ego-motion (8) of the vision sensor (2) in relation to the reference plane (11), which ego-motion (8) occurred between the instants of time (t1, t2) at which the image data units (Di, D1, D2) were gathered;
- Creating a set (Si) of aligned reference views (ARV1, ARV2); and
- Retrieving image labeling-information (13, 14) by which an area (A) is marked, which contains image information associated with a structure (21, 22, 23), which is
∘ elevated with respect to the reference plane (11), and/or
∘ is considered an obstacle.

2. Computer implemented assessment method according to claim 1, wherein the image information of each reference view (Ri, R1, R2) is included in a separate color channel of a stacked image, which represents the set (S) of aligned reference views (ARVi).

3. Computer implemented assessment method according to claim 2, wherein
- any structure (21, 22, 23, 25') or feature, for which the assumption of lying in the reference plane (11) is incorrect, is visible in the stacked image in color, and
- any structure (21, 22, 23, 25') for which the assumption of lying in the reference plane is correct, is visible in the stacked image in grey-scale.

4. Computer readable training data set (10), in particular stored on a physical data carrier or transmitted through a data communication interface, wherein the training data set (10) comprises:
- At least one set (S) of at least two aligned reference views (ARVi), which set (S) is in particular created by a computer implemented assessment method (AM) according to any of claims 1 to 3; and
- Image labeling-information (13, 14) by which an area (A) is marked, which contains image information associated with a structure (21, 22, 23, 25') or feature, which is
∘ elevated with respect to the reference plane (11), and/or which is
∘ considered an obstacle.

5. Computer implemented training method (TM) for an AI-method, an AI-device or an AI-software (9), wherein the training method comprises the following steps:
- Feeding a training data set (10), which is created by an assessment method according to any of claims 1 - 3 and/or which is designed according to claim 4, as a ground truth (12) to a computerized AI device, a computer implemented AI-method or an AI software module (9), wherein
- The AI-device, the AI-method or the AI software module (9) is configured to analyze the image information contained in the at least one set (Si) of at least two aligned reference views (ARVi) and to establish and/or optimize filter rules (16);
- wherein the filter rules (16) attribute:
∘ detected features in any of the aligned reference views (R1, R2, ARVi) and/or
∘ deviations between the aligned reference views (R1, R2, ARVi)
to the image labeling-information (14).

6. Computer implemented training method according to claim 5, wherein
- the AI-method, AI-device or AI software module (9) is configured to receive at least two new aligned reference views (R1', R2', ARVi') and to output emulated labeling information (15), wherein
- an area (A') is identified by the emulated labeling information, which contains image information associated with a structure or feature, which is based on the filter rules (16) presumed to be
∘ in reality elevated with respect to the reference plane (11), and/or
∘ considered an obstacle.

7. Computer readable filter rules (16) for classification or identification of structures in image data units of a vision sensor, wherein the filter rules (16) are created by a computer-implemented training method (TM) according to claim 6 and/or contain rules for:
- Analyzing image information in a set (Si) of aligned reference views (ARVi); wherein
∘ Features in any of the aligned reference views (R1, R2, ARVi) are detected and/or
∘ Deviations between two or more aligned reference views (R1, R2, ARVi) of a set (Si) are detected; and wherein
- Attributing labelling information to those features and/or deviations, which labelling information denotes an area containing a structure, which is presumed to be
∘ elevated with respect to the reference plane (11), and/or which is
∘ considered an obstacle.

8. Computer-implemented classification method (CM) for identifying or classifying structures in the environment (3) of a vision sensor (2) based on filter rules (16), wherein
- the filter rules (16) are established and/or optimized by a computerized AI-device, a computer-implemented AI-method or an AI-software module (9) according to claim 5 or 6, and/or wherein the filter rules (16) are designed according to claim 7; and wherein
- the vision sensor (2) is mounted to physical entity (1); and wherein
the classification method (CM) comprises following steps:
- Gathering at least two new image data units (Di') from the vision sensor (2), wherein the new image data units (Di')
∘ are taken in consecutive instants of time, and
∘ concern the environment (3) of the physical entity (1), and
∘ contain image information from overlapping spaces (7) in this environment (3);
- Defining at least one reference plane (11) in the environment (3), which reference plane (11) has a known location with respect to the vision sensor (2);
- Performing a perspective transformation on the image information contained in the new image data units (Di', D1', D2') to transform it into new reference views (Ri', R1', R2') with a specified incidence angle (K') to the reference plane (11), wherein the transformation is based on the assumption that every feature in the new image data units (D1', D2') belongs to a non-elevated structure lying in the reference plane (11) ;
- Aligning the new reference views (Ri', R1', R2') by compensating for relative motion (8') between the vision sensor (2) and the reference plane (11), which relative motion (8') occurred between the instants of time at which the new image data units (Di') were gathered;
- Creating a new set (Si') of new aligned reference views (ARVi'); and
- Applying the filter rules (16) to the new set (Si'), so that an image section is marked with emulated labeling information (15), which presumably contains a structure, which is
∘ elevated with respect to the reference plane (11), and/or which is
∘ considered an obstacle.

9. Classification method (CM) according to claim 8, wherein the new set (Si') and the emulated labeling information (15) are stored to a physical data carrier and/or outputted.

10. Classification method (CM) according to any of claims 8 or 9, wherein at least one closest relevant structure (CRS) is identified in the new set (Si') of aligned reference views (ARVi') with respect to a pre-defined direction in the reference plane (11), which structure is
- Considered an obstacle and/or presumed to be elevated with respect to the reference plane (11), AND which is
- Among a potential plurality of consecutive structures along the pre-defined direction lying closest to the vision sensor (2) in coordinates of the reference plane (11).

11. Classification method (CM) according to claim 9, wherein
- a section between the vision sensor (2) and a closest relevant structure (CRS) is identified as free space or clearance for further movement of the physical entity, and/or
- any section lying in the pre-defined direction beyond the closest relevant structure (CRS) is identified as blocked space or as an obstacle.

12. Computerized classification device for identifying structures in the environment (3) of a vision sensor (2), wherein the classification device (4) is connected to a vision sensor (2) that is mounted on a movable physical entity (1), and wherein the classification device (4) comprises
- a data processing device, which is designed to perform a classification method according to any of claims 7 to 10; and
- filter rules (16), in particular stored on a physical data carrier or as a part of an executable program section, which filter rules (16) are established and/or optimized by a computer implemented AI-method or AI software module (9) according to claim 5 or 6, and/or wherein the filter rules (16) attribute:
∘ detected features in any of a number of aligned reference views (R1, R2, ARVi) and/or
∘ deviations between two or more aligned reference views (R1, R2, ARVi)
to image labeling-information (14) containing a structure (21, 22, 23), which is
∘ elevated with respect to the reference plane (11), and/or which is
∘ considered an obstacle;

13. Classification software product, in particular stored on a physical data carrier and/or received through a data communication interface, wherein the classification software product is designed for being executed on a data processing device, and wherein the classification software product comprises:
- filter rules (16) that are established and/or optimized by a computer implemented AI-method or AI software module (9) according to claim 5 or 6, and/or wherein the filter rules (16) attribute:
∘ detected features in any of a number of aligned reference views (R1, R2, ARVi) and/or
∘ deviations between two or more aligned reference views (R1, R2, ARVi)
to image labeling-information (14) containing a structure (21, 22, 23), which is
∘ elevated with respect to the reference plane (11), and/or which is
∘ considered an obstacle; AND
- Instructions for performing a classification method according to any of claims 7 to 9 when the instructions are executed on the data processing device.

14. Vehicle, in particular motorized vehicle or autonomously driving vehicle, comprising
- at least one vision sensor (2) mounted on the vehicle (1); and
- a classification device (14) according to claim 11, which is connected to the at least one vision sensor (2); and
- a vehicle control device (24), wherein the vehicle control device (24) is designed to control movement of the vehicle based on image information which is gathered from the vision sensor (2) and processed by the classification device (4);
- wherein a control action of the vehicle control device (24) is based on emulated labeling information (15) outputted by the classification device (4), in particular based on an identified structure, which is presumably
∘ elevated with respect to the reference plane (11), and/or which is
∘ considered an obstacle.

15. Vehicle according to claim 13, wherein the reference plane (11) is the contact plane of the vehicle wheels to the roadway.
